# EUROPÄISCHE PATENTSCHRIFT

(11) **EP 2 645 526 B1**
(45) Veröffentlichungstag und Bekanntmachung des Hinweises auf die Patenterteilung: **30.05.2018**
(21) Anmeldenummer: 13150601.6
(22) Anmeldetag: 09.01.2013
(51) Int. Cl.: H02J 7/00, H01M 10/44, H01M 10/48

(54) **Elektrisches Gerät und Verfahren zum Betreiben eines elektrischen Geräts**
Electrical device and method for operating an electric device
Appareil électrique et procédé de fonctionnement d'un appareil électrique

(30) Priorität: 30.03.2012 DE 102012205260
(43) Veröffentlichungstag der Anmeldung: 02.10.2013
(73) Patentinhaber: ROBERT BOSCH GMBH, 70442 Stuttgart (DE)
(72) Erfinder: Zipf, Philipp, 70435 Stuttgart-Zuffenhausen (DE); Friese, Andreas, 72285 Pfalzgrafenweiler (DE); Kynast, Andreas, 70176 Stuttgart (DE); Kern, Stefan, 60431 Frankfurt am Main (DE)

(56) Entgegenhaltungen:
- JP-A- 2007 259 645
- US-A1- 2005 001 593
- US-A1- 2011 309 681
- US-A1- 2012 013 304

## Beschreibung

Die Erfindung betrifft ein Verfahren zum Betreiben eines elektrischen Geräts gemäß Patentanspruch 1, sowie ein elektrisches Gerät gemäß Patentanspruch 5.

### Stand der Technik

Es ist bekannt, elektrische Geräte, beispielsweise Elektrowerkzeuge, mit Akkumulatoren (Akkus) auszustatten, um die Geräte unabhängig von einem Versorgungsnetz zu betreiben. Bei tragbaren elektrischen Geräten ist es bekannt, Lithium-Ionen-Akkus zu verwenden, die ein günstiges Verhältnis zwischen Energiedichte und Gewicht und Größe aufweisen. Es ist bekannt, Akkus von elektrischen Geräten als abgeschlossene und unter Umständen austauschbare Einheiten, so genannte Akku-Packs, auszubilden.

Es ist bekannt, beispielsweise auch Rasenmäher als mit Akkus betriebene elektrische Geräte auszubilden. Wegen der begrenzten Energiekapazität bekannter Akkus sind derartige Rasenmäher allerdings noch nicht in der Lage, hinsichtlich Leistung und Betriebszeiten mit benzinbetriebenen Rasenmähern zu konkurrieren. Größere Flächen können nicht gemäht werden, ohne die Arbeit zu unterbrechen, um den Akku des Rasenmähers nachzuladen. Nachteilig ist auch der hohe Leistungsbedarf bei längerem Mähen unter erschwerten Bedingungen wie hohem oder feuchtem Gras. Dieser führt zu einer starken Erwärmung des Akkus, die seiner Lebensdauer abträglich ist. Zudem muss der Akku-Pack nach dem Auswechseln erst abkühlen, bevor er nachgeladen werden kann. Dadurch muss die Arbeit auf längere Zeit unterbrochen werden.

Die US 2011/0309681 A1 beschreibt eine Steuervorrichtung und ein Verfahren zum Betreiben eines elektronischen Geräts, bei dem zunächst eine primäre Batterie entladen wird, bis sie eine zuvor als kritisch definierte Temperatur erreicht. Sodann erfolgt ein Umschalten, sodass eine sekundäre Batterie entladen wird, bis auch die sekundäre Batterie die zuvor als kritisch festgelegte Temperatur erreicht.

Auch in JP 2007 259645 A wird eine Steuervorrichtung beschrieben, die ein Entladen von mehreren Batterien in Abhängigkeit von der Temperatur der einzelnen Batterien steuert, wobei die Batterie entladen wird, die eine niedrigere Temperatur aufweist, als andere Batterien.

### Offenbarung der Erfindung

Die Aufgabe der vorliegenden Erfindung besteht darin, ein verbessertes Verfahren zum Betreiben eines elektrischen Geräts anzugeben. Diese Aufgabe wird durch ein Verfahren mit den Merkmalen des Anspruchs 1 gelöst. Es ist ferner Aufgabe der vorliegenden Erfindung, ein verbessertes elektrisches Gerät bereitzustellen. Diese Aufgabe wird durch ein elektrisches Gerät mit den Merkmalen des Anspruchs 5 gelöst. Bevorzugte Weiterbildungen sind in den abhängigen Ansprüchen angegeben.

Bei einem erfindungsgemäßen Verfahren zum Betreiben eines elektrischen Geräts, das einen ersten Akku-Pack, einen zweiten Akku-Pack und eine elektrische Last aufweist, wird zu jedem Zeitpunkt nur höchstens ein Akku-Pack zum Betreiben der Last entladen. Dabei wird der zu entladende Akku-Pack in Abhängigkeit einer Temperatur des ersten Akku-Packs und einer Temperatur des zweiten Akku-Packs und/oder in Abhängigkeit eines Innenwiderstands des ersten Akku-Packs und eines Innenwiderstands des zweiten Akku-Packs gewählt. Vorteilhafterweise erfolgt eine Erwärmung des ersten Akku-Packs und des zweiten Akku-Packs dann gleichmäßig, wodurch Spitzenerwärmungen der Akku-Packs seltener auftreten. Hierdurch wird die Lebensdauer der Akku-Packs erhöht.

In einer bevorzugten Ausführungsform des Verfahren wird der Akku-Pack mit der geringsten Temperatur entladen. Vorteilhafterweise wird dadurch eine übermäßige Erwärmung der Akku-Packs des elektrischen Geräts vermieden.

In einer zweckmäßigen Ausführungsform des Verfahrens wird ein Entladen eines Akku-Packs beendet, wenn die Temperatur des Akku-Packs einen festgelegten Schwellenwert erreicht. Vorteilhafterweise kann dadurch ein Überhitzung des Akku-Packs vermieden werden.

Der erste Akku-Pack und der zweite Akku-Pack werden abwechselnd entladen, wenn sich die Temperatur des ersten Akku-Packs und die Temperatur des zweiten Akku-Packs um weniger als einen festgelegten Schwellenwert voneinander unterscheiden. Vorteilhafterweise erwärmen sich die beiden Akku-Packs dann etwa gleich stark, wobei die Erwärmung der Akku-Packs durch den wechselweisen Betrieb der beiden Akku-Packs insgesamt geringer ist als bei Entladung nur eines Akku-Packs. Hierdurch wird vorteilhafterweise eine längere Laufzeit ermöglicht, als bei einer sequentiellen Entladung der Akku-Packs nacheinander möglich wäre. Der Schwellenwert, unterhalb dessen die Temperaturen der Akku-Packs als etwa gleich beurteilt werden, kann beispielsweise bei 2°C liegen.

Dabei wird häufiger als einmal pro Minute zwischen den Akku-Packs gewechselt. Vorteilhafterweise bewirkt eine Trägheit des Systems dann, dass sich beide Akku-Packs stets auf ungefähr gleicher Temperatur befinden. Außerdem erfolgt die Entladung der Akku-Packs auch etwa gleichmäßig. Hierdurch wird vorteilhafterweise vermieden, dass ein Benutzer des elektrischen Geräts beim Umschalten zwischen den Akku-Packs eine Leistungsänderung bemerkt.

In einer zusätzlichen Weiterbildung des Verfahrens wird der Akku-Pack mit dem geringsten Innenwiderstand entladen, falls eine benötigte elektrische Leistung einen festgelegten Schwellenwert überschreitet. Vorteilhafterweise können hierdurch kurzzeitig benötigte Spitzenleistungen abgefangen werden. Die Verwendung des Akku-Packs mit dem geringsten Widerstand hat vorteilhafterweise die geringste Erwärmung zur Folge. Vorteilhafterweise kann das Verfahren so ausgestaltet sein, dass der Akku-Pack mit dem geringsten Innenwiderstand im Fall einer kurzzeitig benötigten Spitzenleistung auch dann zur Entladung ausgewählt wird, falls er nicht die geringste Temperatur aller Akku-Packs aufweist.

Ein erfindungsgemäßes elektrisches Gerät weist einen ersten Akku-Pack zum Versorgen des Geräts mit Energie auf. Außerdem weist das Gerät einen zweiten Akku-Pack zum Versorgen des Geräts mit Energie auf. Vorteilhafterweise erhöht sich dadurch die maximal mögliche Betriebszeit des elektrischen Geräts.

Das Gerät ist ausgebildet, nach einem Verfahren der vorher beschriebenen Art betrieben zu werden. Vorteilhafterweise wird die in den beiden Akku-Packs gespeicherte Energie dann optimal genutzt. Außerdem werden die Akku-Packs dann vorteilhafterweise so betrieben, dass ihre Lebensdauer möglichst groß ist.

In einer zweckmäßigen Ausführungsform des elektrischen Geräts weist dieses eine Schaltungsanordnung auf, die dazu vorgesehen ist, zwischen einer Versorgung durch den ersten Akku-Pack und einer Versorgung durch den zweiten Akku-Pack umzuschalten. Vorteilhafterweise ist es dann möglich, die Akku-Packs nicht gleichzeitig sondern sequentiell oder abwechselnd zu entladen.

In einer bevorzugten Ausführungsform des elektrischen Geräts weisen der erste Akku-Pack und der zweite Akku-Pack unterschiedliche Innenwiderstände auf. Vorteilhafterweise können die unterschiedlichen Akku-Packs dann für unterschiedliche Zwecke eingesetzt werden. Beispielsweise kann ein kurzzeitig erhöhter Leistungsbedarf durch den Akku-Pack mit dem geringeren Innenwiderstand getragen werden.

In einer Weiterbildung des elektrischen Geräts weist das Gerät einen dritten Akku-Pack auf. Vorteilhafterweise erhöht sich die maximal mögliche Betriebsdauer des elektrischen Geräts dadurch weiter.

In einer Ausführungsform des elektrischen Geräts ist dieses ein Rasenmäher. Vorteilhafterweise ermöglicht es das Vorsehen eines mindestens zweiten Akku-Packs dann, eine größere Rasenfläche ohne Unterbrechung zu mähen.

Die Erfindung wird nun anhand der beigefügten Figuren näher erläutert. Dabei zeigen:
Figur 1 ein schematisches Blockschaltbild eines elektrischen Geräts;
Figur 2 ein erstes Entladeschema;
Figur 3 ein zweites Entladeschema;
Figur 4 ein drittes Entladeschema;
Figur 5 ein viertes Entladeschema; und
Figur 6 ein fünftes Entladeschema.

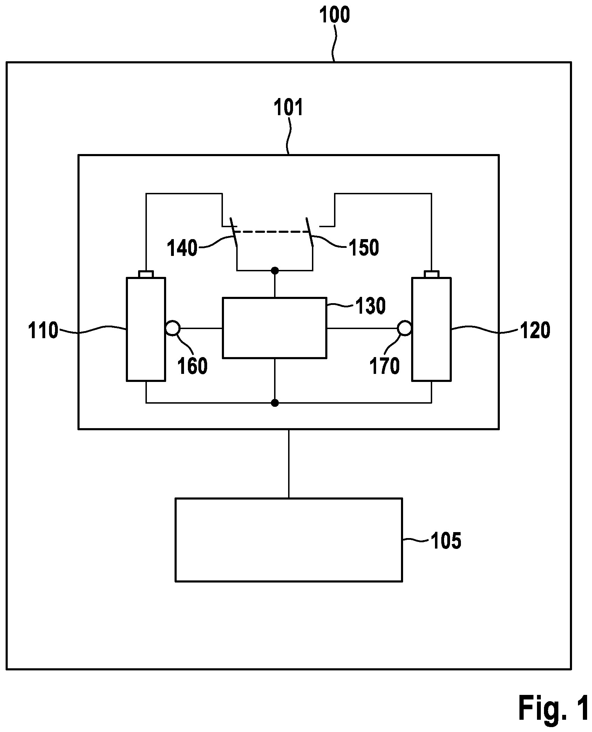

Figur 1 zeigt ein schematisches Blockschaltbild eines elektrischen Geräts 100, das unabhängig von einer Versorgung durch ein Stromnetz betrieben werden kann. Das elektrische Gerät 100 kann beispielsweise ein tragbares elektrisches Gerät, etwa ein Handwerkzeug, ein fahrbares elektrisches Gerät, etwa ein elektrisch betriebener Rasenmäher, oder ein stationäres oder semi-stationäres Gerät, etwa eine Tischkreissäge, sein.

Das elektrische Gerät 100 weist einen ersten Akku-Pack 110 und einen zweiten Akku-Pack 120 auf. Der erste Akku-Pack 110 und der zweite Akku-Pack 120 können jeweils eine oder mehrere Akkumulatorzellen umfassen. Bevorzugt sind der erste Akku-Pack 110 und der zweite Akku-Pack 120 jeweils in einem Gehäuse gekapselt, um sie vor eindringendem Wasser zu schützen. Ebenfalls bevorzugt können der erste Akku-Pack 110 und der zweite Akku-Pack 120 aus dem elektrischen Gerät 100 entnommen werden. Falls das elektrische Gerät 100 ein Rasenmäher ist, so können der erste Akku-Pack 110 und der zweite Akku-Pack 120 beispielsweise in einer auf der Oberseite des Mähergehäuses angeordneten Vorrichtung aufgenommen und für den Fahrbetrieb sicher befestigt werden.

Das elektrische Gerät 100 weist eine elektrische Last 105 sowie eine Schaltungsanordnung 101 auf. Die Akku-Packs 110, 120 sind dazu vorgesehen, die elektrische Last 105 zu betreiben. Die elektrische Last 105 kann beispielsweise ein elektrischer Antrieb, etwa ein Elektromotor, sein. In anderen Ausführungsformen kann die elektrische Last beispielsweise eine elektrische Heizung sein.

Das elektrische Gerät 100 weist ferner eine elektrische Schaltung 130 auf, die dazu vorgesehen ist, ein Entladen des ersten Akku-Packs 110 und des zweiten Akku-Packs 120 zu steuern, also ein Betreiben der elektrischen Last durch den ersten Akku-Pack 110 und durch den zweiten Akku-Pack 120. Hierzu ist die Schaltung 130 mit einem ersten Schalter 140 und mit einem zweiten Schalter 150 verbunden. Ist der erste Schalter 140 geschlossen, so wird der erste Akku-Pack 110 entladen. Ist der zweite Schalter 150 geschlossen, so wird der zweite Akku-Pack 120 entladen. Die Schaltung 130 und die Schalter 140, 150 sind so ausgebildet, dass stets höchstens einer der Schalter 140, 150 geschlossen sein kann. Der jeweils andere Schalter 140, 150 ist dann geöffnet. Hierdurch wird sichergestellt, dass die Akku-Packs 110, 120 nicht gleichzeitig entladen werden.

Die Schaltung 130 des elektrischen Geräts 100 ist ausgebildet, die Akku-Packs 110, 120 in Abhängigkeit der Temperaturen der Akku-Packs 110, 120 und/oder der Innenwiderstände der Akku-Packs 110, 120 zu entladen. Hierzu ist die Schaltung 130 mit einem ersten Temperatursensor 160 und einem zweiten Temperatursensor 170 verbunden. Der erste Temperatursensor 160 ist dazu vorgesehen, eine Temperatur des ersten Akku-Packs 110 zu detektieren. Der zweite Temperatursensor 170 ist dazu vorgesehen, eine Temperatur des zweiten Akku-Packs 120 zu ermitteln. Zusätzlich kann die Schaltung 130 mit Vorrichtungen verbunden sein, um die elektrischen Innenwiderstände der Akku-Packs 110, 120 zu ermitteln. Hierzu können die Innenwiderstände der Akku-Packs 110, 120 beispielsweise gemessen werden. Die Innenwiderstände der Akku-Packs 110, 120 können aber auch in auf oder in den Akku-Packs 110, 120 angeordneten Datenfeldern codiert sein, die durch die Schaltung 130 ausgelesen werden. Weiter ist es möglich, die Innenwiderstände der Akku-Packs 110, 120 dauerhaft in der Schaltung 130 zu hinterlegen.

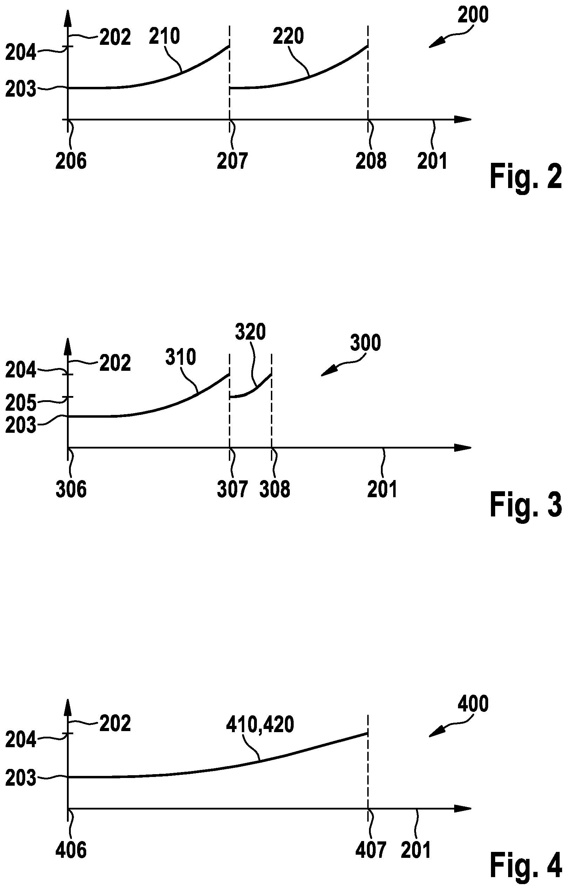

Figur 2 zeigt in einer schematisierten Darstellung ein erstes mögliches Entladeschema 200 zum Entladen des ersten Akku-Packs 110 und des zweiten Akku-Packs 120. Auf einer horizontalen Achse des in Figur 2 dargestellten Graphen ist eine Zeit 201 aufgetragen. Auf einer vertikalen Achse sind Temperaturen 202 der Akku-Packs 110, 120 aufgetragen. Das erste Entladeschema 200 geht von der Situation aus, dass der erste Akku-Pack 110 und der zweite Akku-Pack 120 zu einem ersten Zeitpunkt 206 beide eine gleiche niedrige Temperatur 203 aufweisen. Die Temperaturen können beispielsweise dann als gleich beurteilt werden, wenn sie sich um weniger als 2°C unterscheiden.

Die Schaltung 130 beginnt zum ersten Zeitpunkt 206 zunächst mit einer Entladung des ersten Akku-Packs 110, um das elektrische Gerät 100 zu betreiben, wobei der erste Akku-Pack 110 willkürlich ausgewählt ist. Durch die Entladung des ersten Akku-Packs 110 steigt die Temperatur des ersten Akku-Packs 110 gemäß eines Temperaturverlaufs 210, bis sie zu einem zweiten Zeitpunkt 207 eine Grenztemperatur 204 erreicht hat. Die Grenztemperatur 204 ist eine von der Bauart der Akku-Packs 110, 120 abhängige Temperatur, ab der eine dauerhafte Verschlechterung der elektrischen Eigenschaften der Akku-Packs 110, 120 zu befürchten ist.

Zum zweiten Zeitpunkt 207 ist der erste Akku-Pack 110 auf die Grenztemperatur 204 erwärmt. Der zweite Akku-Pack 120 befindet sich jedoch weiter auf der niedrigen Temperatur 203. Daher schaltet die Schaltung 130 des elektrischen Geräts 100 zum zweiten Zeitpunkt 207 auf eine Versorgung durch den zweiten Akku-Pack 120 um. Hierdurch erwärmt sich nun der zweiten Akku-Pack 120 gemäß eines Temperaturverlaufs 220, bis der zweite Akku-Pack 120 zu einem dritten Zeitpunkt 208 die Grenztemperatur 204 erreicht hat und abgeschaltet werden muss.

Falls der erste Akku-Pack 110 im Zeitraum zwischen dem zweiten Zeitpunkt 207 und dem dritten Zeitpunkt 208 ausreichend abgekühlt ist, so kann zum dritten Zeitpunkt 208 wieder auf eine Versorgung durch den ersten Akku-Pack 110 umgeschaltet werden. Andernfalls muss das elektrische Gerät 100 komplett abgeschaltet werden.

Figur 3 zeigt in schematischer Darstellung ein zweites mögliches Entladeschema 300 zur Entladung der Akku-Packs 110, 120 des elektrischen Geräts 100. Das zweite Entladeschema 300 geht von der Situation aus, dass der erste Akku-Pack 110 zu einem ersten Zeitpunkt 306 die niedrige Temperatur 203, der zweite Akku-Pack 120 jedoch eine gegenüber der niedrigen Temperatur 203 erhöhte mittlere Temperatur 205 aufweist.

Die Schaltung 130 des elektrischen Geräts 100 wählt zum ersten Zeitpunkt 306 den ersten Akku-Pack 110 zur Entladung aus, da dieser die niedrigere Temperatur aufweist. Während der Entladung des ersten Akku-Packs 110 erhöht sich die Temperatur des ersten Akku-Packs 110 gemäß einem ersten Verlauf 310, bis die Temperatur des ersten Akku-Packs 110 zu einem zweiten Zeitpunkt 307 wieder die Grenztemperatur 204 erreicht. Daher schaltet die Schaltung 130 zum zweiten Zeitpunkt 307 auf eine Versorgung durch den zweiten Akku-Pack 120 um. Während der Entladung des zweiten Akku-Packs 120 steigt dessen Temperatur gemäß eines zweiten Verlaufs 320, bis auch der zweite Akku-Pack 120 zu einem dritten Zeitpunkt 308 die Grenztemperatur 204 erreicht hat. Falls der erste Akku-Pack 110 bis zum dritten Zeitpunkt 308 ausreichend abgekühlt ist, so kann zum dritten Zeitpunkt 308 wieder auf eine Versorgung durch den ersten Akku-Pack 110 umgeschaltet werden. Andernfalls muss das elektrische Gerät 100 zum dritten Zeitpunkt 308 komplett abgeschaltet werden.

Figur 4 zeigt ein drittes mögliches Entladeschema 400 zum Entladen der Akku-Packs 110, 120 des elektrischen Geräts 100. Das dritte Entladeschema 400 geht, wie das erste Entladeschema 200 der Figur 2, von der Situation aus, dass der erste Akku-Pack 110 und der zweite Akku-Pack 120 zu einem ersten Zeitpunkt 406 beide die gleiche niedrige Temperatur 203 aufweisen. Die Temperaturen können beispielsweise dann als gleich beurteilt werden, wenn sie sich um weniger als 2°C unterscheiden.

Jedoch wird nach dem dritten Entladeschema 400 nicht der erste Akku-Pack 110 alleine so lange entladen, bis er die Grenztemperatur 204 erreicht. Stattdessen wird gemäß des dritten Entladeschemas 400 ab dem ersten Zeitpunkt 406 in kurzen Zeitabständen zwischen einer Entladung des ersten Akku-Packs 110 und einer Entladung des zweiten Akku-Packs 120 umgeschaltet. Bevorzugt erfolgt diese Umschaltung häufiger als einmal pro Minute. Besonders bevorzugt erfolgt diese Umschaltung häufiger als einmal in einer halben Minute, beispielsweise alle 5 Sekunden, alle 10 Sekunden oder alle 20 Sekunden. Bei der Wahl der Zeitabstände ist zwischen einer möglichst gleichmäßigen Entladung und Erwärmung der Akku-Packs 110, 120 durch kurze Zeitabstände und zwischen einer Minimierung der Umschaltverluste durch eine Wahl längerer Zeitabstände abzuwägen.

Durch die regelmäßige Umschaltung zwischen dem ersten Akku-Pack 110 und dem zweiten Akku-Pack 120 erwärmen sich der erste Akku-Pack 110 und der zweite Akku-Pack 120 gleichartig gemäß Temperaturverläufen 410, 420. Die Erwärmung erfolgt so lange, bis beide Akku-Packs 110, 120 zu einem zweiten Zeitpunkt 407 die Grenztemperatur 204 erreichen und das elektrische Gerät 100 abgeschaltet werden muss. Da jedoch jeder Akku-Pack 110, 120 während einer Entladung des jeweils anderen Akku-Packs 120, 110 wieder abkühlen kann, ist die Zeitdauer zwischen dem ersten Zeitpunkt 406 und dem zweiten Zeitpunkt 407 beim dritten Entladeschema 400 größer als die Zeitdauer zwischen dem ersten Zeitpunkt 206 und dem dritten Zeitpunkt 208 beim ersten Entladeschema 200 der Figur 2. Somit ist das dritte Entladeschema 400 gegenüber dem ersten Entladeschema 200 bevorzugt.

Ein weiterer Vorteil des dritten Entladeschemas 400 ist, dass durch den in kurzen Abständen abwechselnden Betrieb des ersten Akku-Packs 110 und des zweiten Akku-Packs 120 beide Akku-Packs 110, 120 zu jedem Zeitpunkt einen etwa gleichen Ladestand aufweisen. Dadurch bemerkt ein Benutzer des elektrischen Geräts 100 beim Umschalten zwischen den Akku-Packs 110, 120 keine Leistungsänderung.

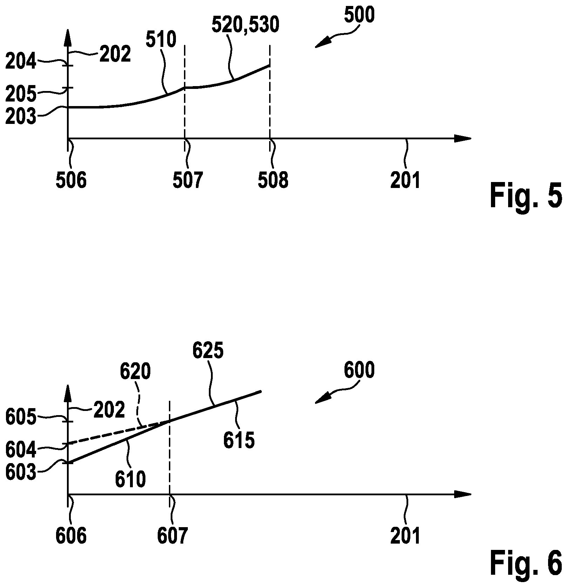

Figur 5 zeigt ein viertes mögliches Entladeschema 500 zum Entladen der Akku-Packs 110, 120 des elektrischen Geräts 100. Das vierte Entladeschema 500 geht, wie das zweite Entladeschema 300, wiederum davon aus, dass der erste Akku-Pack 110 zu einem ersten Zeitpunkt 506 die niedrige Temperatur 203 aufweist, während sich der zweite Akku-Pack 120 zum ersten Zeitpunkt 506 bereits auf der gegenüber der niedrigen Temperatur 203 erhöhten mittleren Temperatur 205 befindet. Die Schaltung 130 des elektrischen Geräts 100 wählt daher zum ersten Zeitpunkt 506 den Akku-Pack mit der geringeren Temperatur, also den ersten Akku-Pack 110, zur Entladung aus. Während der erste Akku-Pack 110 entladen wird, steigt seine Temperatur gemäß eines ersten Temperaturverlaufs 510. Zu einem zweiten Zeitpunkt 507 hat der erste Akku-Pack 110 ebenfalls die mittlere Temperatur 205 erreicht. Somit befinden sich der erste Akku-Pack 110 und der zweite Akku-Pack 120 zum zweiten Zeitpunkt 507 auf der gleichen Temperatur. Eine gleiche Temperatur bedeutet in diesem Zusammenhang, dass die durch die Temperatursensoren 160, 170 ermittelten Temperaturen der Akku-Packs 110, 120 sich um weniger als einen festgelegten Schwellenwert von beispielsweise 2 °C unterscheiden.

Zum zweiten Zeitpunkt 507 beginnt die Schaltung 130, die Akku-Packs 110, 120 abwechselnd zu entladen. Wiederum können die Zeiträume zwischen einem Umschalten zwischen den Akku-Packs 110, 120 zwischen etwa 5 Sekunden und einer Minute betragen. Durch das abwechselnde Entladen der Akku-Packs 110, 120 steigen die Temperaturen der Akku-Packs 110, 120 auf gleichartige Weise gemäß eines weiteren Verlaufs 520 der ersten Akku-Temperatur und eines Verlaufs 530 der zweiten Akku-Temperatur.

Zu einem dritten Zeitpunkt 508 erreichen der erste Akku-Pack 110 und der zweite Akku-Pack 120 die Grenztemperatur 204. Daher muss zum dritten Zeitpunkt 508 das elektrische Gerät 100 abgeschaltet werden. Da im Zeitraum zwischen dem zweiten Zeitpunkt 507 und dem dritten Zeitpunkt 508 der jeweils gerade nicht in Betrieb befindliche Akku-Pack 110, 120 abkühlen kann, erfolgt die Temperaturerhöhung gemäß der Temperaturverläufe 520, 530 verlangsamt. Dadurch ist die Zeitdauer zwischen dem ersten Zeitpunkt 506 und dem dritten Zeitpunkt 508 beim vierten Entladeschema 500 größer als die Zeitdauer zwischen dem ersten Zeitpunkt 306 und dem dritten Zeitpunkt 308 beim zweiten Entladeschema 300 der Figur 3. Daher ist das vierte Entladeschema 500 gegenüber dem zweiten Entladeschema 300 bevorzugt.

In einer Weiterbildung des elektrischen Geräts 100 und des durch die Schaltung 130 ausgeführten Verfahrens zum Entladen der Akku-Packs 110, 120 können auch Innenwiderstände der Akku-Packs 110, 120 berücksichtigt werden. Ein höherer Innenwiderstand eines Akku-Packs 110, 120 bedeutet eine stärkere Erwärmung des jeweiligen Akku-Packs 110, 120 beim Entladen des Akku-Packs 110, 120. Daher kann, wenn sich beide Akku-Packs 110, 120 auf einer Temperatur nahe der Grenztemperatur 204 befinden, der Akku-Pack 110, 120 mit dem niedrigeren Innenwiderstand verwendet werden.

Der Akku-Pack 110, 120 mit dem niedrigeren Innenwiderstand kann auch verwendet werden, falls das elektrische Gerät 100 kurzzeitig eine große elektrische Leistung benötigt. Steigt eine durch das elektrische Gerät 100 geforderte Stromstärke beispielsweise auf einen Wert von 80 A oder 120 A, so kann unabhängig von den Temperaturen der Akku-Packs 110, 120 auf den Akku-Pack 110, 120 mit dem niedrigeren Innenwiderstand umgeschaltet werden.

In einer zusätzlichen Weiterbildung des Verfahrens kann eine Umschaltung zwischen den Akku-Packs 110, 120 auch bezüglich großer und kleiner Lasten des elektrischen Geräts 100 erfolgen. In dieser Weiterbildung weist das elektrische Gerät 100 mindestens zwei unterschiedlich dimensionierte elektrische Lasten auf, beispielsweise einen schwächeren Elektromotor und einen stärkeren Elektromotor. Die beiden Lasten des elektrischen Geräts 100 können gleichzeitig betrieben werden. Jede der elektrischen Lasten kann durch jeden der Akku-Packs 110, 120 betrieben werden. Das Verfahren ist dann so ausgestaltet, dass der wärmere Akku-Pack 110, 120 zum Betreiben der kleineren elektrischen Last des elektrischen Geräts 100, der kühlere Akku-Pack 110, 120 zum Betreiben der größeren elektrischen Last des elektrischen Geräts 100 genutzt wird.

Figur 6 zeigt ein fünftes Entladeschema 600 zur Erläuterung dieses Verfahrens. Zu einem ersten Zeitpunkt 606 weist der erste Akku-Pack 110 eine erste Temperatur 603 auf. Der zweite Akku-Pack 120 weist zum ersten Zeitpunkt 606 eine zweite Temperatur 604 auf, die höher als die erste Temperatur 603 ist. Daher wird ab dem ersten Zeitpunkt 606 der erste Akku-Pack 110 zum Betreiben der größeren elektrischen Last des Geräts 100 und der zweite Akku-Pack 120 zum Betreiben der kleineren elektrischen Last des Geräts 100 genutzt.

Die Temperatur des ersten Akku-Packs 110 steigt in der Folge gemäß eines ersten Temperaturverlaufs 610, während die Temperatur des zweiten Akku-Packs 120 gemäß eines flacheren zweiten Temperaturverlaufs 620 ansteigt. Der steilere Temperaturanstieg 610 des ersten Akku-Packs 110 ist dadurch begründet, dass der erste Akku-Pack 110 eine größere Leistung bereitstellen muss. Zu einem zweiten Zeitpunkt 607 erreichen beide Akku-Packs 110, 120 eine dritte Temperatur 605, die höher als die erste Temperatur 603 und als die zweite Temperatur 604 ist.

Die Akku-Packs 110, 120 befinden sich zum zweiten Zeitpunkt 607 somit ungefähr auf gleicher Temperatur, wobei die vorstehenden Ausführungen über die Definition einer Temperaturgleichheit sinngemäß anzuwenden sind. Ab dem zweiten Zeitpunkt 607 wechseln sich der erste Akku-Pack 110 und der zweite Akku-Pack 120 beim Betrieb der kleineren elektrischen Last und der größeren elektrischen Last ab. In der Folge steigt die Temperatur des ersten Akku-Packs 110 ab dem zweiten Zeitpunkt 607 gemäß eines weiteren Temperaturverlaufs 615, während die Temperatur des zweiten Akku-Packs 120 gemäß eines zweiten weiteren Temperaturverlaufs 625 ansteigt. Die weiteren Temperaturverläufe 615, 625 weisen beide die gleiche Steigung auf, da die Akku-Packs 110, 120 beim Betreiben der beiden elektrischen Lasten einander abwechseln.

In einer Weiterbildung des elektrischen Geräts 100 kann das Gerät 100 auch dann verwendet werden, wenn lediglich ein Akku-Pack 110, 120 eingesetzt ist.

In einer zusätzlichen Weiterbildung des elektrischen Geräts 100 weist das elektrische Gerät 100 einen dritten Akku-Pack und/oder noch weitere Akku-Packs auf. Auch in dieser Weiterbildung des elektrischen Geräts 100 ist die Schaltung 130 des elektrischen Geräts 100 ausgebildet, bevorzugt den Akku-Pack mit der jeweils niedrigsten Temperatur zu entladen. Weisen die Akku-Packs des elektrischen Geräts 100 alle jeweils ungefähr die gleiche Temperatur auf, unterscheiden sich die Temperaturen also um weniger als beispielsweise 2 °C, so wird bevorzugt mit kurzen zeitlichen Abständen zwischen den einzelnen Akku-Packs des elektrischen Geräts 100 umgeschaltet.

## Patentansprüche

1. Verfahren zum Betreiben eines elektrischen Geräts (100),
das einen ersten Akku-Pack (110), einen zweiten Akku-Pack (120) und eine elektrische Last aufweist,
wobei zu jedem Zeitpunkt nur höchstens ein Akku-Pack (110, 120) zum Betreiben der Last entladen wird,
wobei der zu entladende Akku-Pack (110, 120) in Abhängigkeit einer Temperatur des ersten Akku-Packs (110) und einer Temperatur des zweiten Akku-Packs (120)
und/oder in Abhängigkeit eines Innenwiderstands des ersten Akku-Packs (110) und eines Innenwiderstands des zweiten Akku-Packs (120) gewählt wird,
**dadurch gekennzeichnet, dass**
der erste Akku-Pack (110) und der zweite Akku-Pack (120) abwechselnd entladen werden, wenn sich die Temperatur des ersten Akku-Packs (110) und die Temperatur des zweiten Akku-Packs (120) um weniger als einen festgelegten Schwellenwert voneinander unterscheiden,
wobei häufiger als einmal pro Minute zwischen den Akku-Packs (110, 120) gewechselt wird,
wobei sich der erste Akku-Pack (110) und der zweite Akku-Pack (120) gleichartig erwärmen.

2. Verfahren gemäß Anspruch 1,
wobei der Akku-Pack (110, 120) mit der geringsten Temperatur entladen wird.

3. Verfahren gemäß einem der vorhergehenden Ansprüche,
wobei ein Entladen eines Akku-Packs (110, 120) beendet wird, wenn die Temperatur des Akku-Packs (110, 120) einen festgelegten Schwellenwert erreicht.

4. Verfahren gemäß einem der vorhergehenden Ansprüche,
wobei der Akku-Pack (110, 120) mit dem geringsten Innenwiderstand entladen wird, falls eine benötigte elektrische Leistung einen festgelegten Schwellenwert überschreitet.

5. Elektrisches Gerät (100),
mit einem ersten Akku-Pack (110) zum Versorgen des Geräts (100) mit Energie,
einem zweiten Akku-Pack (120) zum Versorgen des Geräts (100) mit Energie
und einer elektrischen Schaltung (130),
**dadurch gekennzeichnet,**
**dass** die elektrische Schaltung (130) ausgebildet ist, das elektrische Gerät (100) nach einem Verfahren gemäß den Ansprüchen 1 bis 4 zu betreiben.

6. Elektrisches Gerät (100) gemäß Anspruch 5 ,
wobei das Gerät (100) eine Schaltungsanordnung (140, 150) aufweist, die dazu vorgesehen ist, zwischen einer Versorgung durch den ersten Akku-Pack (110) und einer Versorgung durch den zweiten Akku-Pack (120) umzuschalten.

7. Elektrisches Gerät (100) gemäß einem der Ansprüche 5 und 6,
wobei der erste Akku-Pack (110) und der zweite Akku-Pack (120) unterschiedliche Innenwiderstände aufweisen.

8. Elektrisches Gerät (100) gemäß einem der Ansprüche 5 bis 7,
wobei das elektrische Gerät (100) einen dritten Akku-Pack aufweist.

9. Elektrisches Gerät (100) gemäß einem der Ansprüche 5 bis 8,
wobei das elektrische Gerät (100) ein Rasenmäher ist.

## Claims

1. Method for operating an electrical appliance (100),
which has a first rechargeable battery pack (110), a second rechargeable battery pack (120) and an electrical load,
wherein, at any time, only one rechargeable battery pack (110, 120) at most is discharged in order to operate the load,
wherein the rechargeable battery pack (110, 120) that is to be discharged is selected depending on a temperature of the first rechargeable battery pack (110) and a temperature of the second rechargeable battery pack (120)
and/or depending on an internal resistance of the first rechargeable battery pack (110) and an internal resistance of the second rechargeable battery pack (120),
**characterized in that**
the first rechargeable battery pack (110) and the second rechargeable battery pack (120) are discharged in alternating fashion when the temperature of the first rechargeable battery pack (110) and the temperature of the second rechargeable battery pack (120) differ from one another by less than a determined threshold value,
wherein a change between the rechargeable battery packs (110, 120) is made more frequently than once per minute,
wherein the first rechargeable battery pack (110) and the second rechargeable battery pack (120) heat up in a similar manner.

2. Method according to Claim 1,
wherein the rechargeable battery pack (110, 120) with the lowest temperature is discharged.

3. Method according to either of the preceding claims,
wherein the discharging of a rechargeable battery pack (110, 120) is terminated when the temperature of the rechargeable battery pack (110, 120) reaches a determined threshold value.

4. Method according to one of the preceding claims,
wherein the rechargeable battery pack (110, 120) with the lowest internal resistance is discharged if a required electrical power exceeds a determined threshold value.

5. Electrical appliance (100),
having a first rechargeable battery pack (110) for supplying energy to the appliance (100),
a second rechargeable battery pack (120) for supplying energy to the appliance (100),
and an electrical circuit (130),
**characterized in that**
the electrical circuit (130) is designed to operate the electrical appliance (100) in accordance with a method according to Claims 1 to 4.

6. Electrical appliance (100) according to Claim 5,
wherein the appliance (100) has a circuit arrangement (140, 150), which is provided to switch over between the supply of power using the first rechargeable battery pack (110) and the supply of power using the second rechargeable battery pack (120).

7. Electrical appliance (100) according to either of Claims 5 and 6,
wherein the first rechargeable battery pack (110) and the second rechargeable battery pack (120) have different internal resistances.

8. Electrical appliance (100) according to one of Claims 5 to 7,
wherein the electrical appliance (100) has a third rechargeable battery pack.

9. Electrical appliance (100) according to one of Claims 5 to 8,
wherein the electrical appliance (100) is a lawnmower.

## Revendications

1. Procédé pour faire fonctionner un appareil électrique (100),
lequel possède un premier bloc d'accumulateurs (110), un deuxième bloc d'accumulateurs (120) et une charge électrique,
à tout moment, au plus un seul bloc d'accumulateurs (110, 120) étant déchargé pour faire fonctionner la charge,
le bloc d'accumulateurs (110, 120) à décharger étant sélectionné en fonction d'une température du premier bloc d'accumulateurs (110) et d'une température du deuxième bloc d'accumulateurs (120)
et/ou en fonction d'une résistance interne du premier bloc d'accumulateurs (110) et d'une résistance interne du deuxième bloc d'accumulateurs (120),
**caractérisé en ce que**
le premier bloc d'accumulateurs (110) et le deuxième bloc d'accumulateurs (120) sont déchargés en alternance lorsque la différence entre la température du premier bloc d'accumulateurs (110) et la température du deuxième bloc d'accumulateurs (120) est inférieure à une valeur de seuil fixée,
l'alternance entre les blocs d'accumulateurs (110, 120) s'effectuant plus d'une fois par minute,
le premier bloc d'accumulateurs (110) et le deuxième bloc d'accumulateurs (120) s'échauffant de la même manière.

2. Procédé selon la revendication 1, le bloc d'accumulateurs (110, 120) ayant la température la plus basse étant déchargé.

3. Procédé selon l'une des revendications précédentes, une décharge d'un bloc d'accumulateurs (110, 120) étant arrêtée lorsque la température du bloc d'accumulateurs (110, 120) atteint une valeur de seuil fixée.

4. Procédé selon l'une des revendications précédentes, le bloc d'accumulateurs (110, 120) ayant la résistance interne la plus faible étant déchargé dans le cas où une puissance électrique requise devient supérieure à une valeur de seuil fixée.

5. Appareil électrique (100),
comprenant un premier bloc d'accumulateurs (110) destiné à alimenter l'appareil (100) en énergie,
un deuxième bloc d'accumulateurs (120) destiné à alimenter l'appareil (100) en énergie,
et un circuit électrique (130),
**caractérisé en ce que**
le circuit électrique (130) est conçu pour faire fonctionner l'appareil électrique (100) selon un procédé selon l'une des revendications 1 à 4.

6. Appareil électrique (100) selon la revendication 5, l'appareil (100) possédant un arrangement de circuit (140, 150) qui est destiné à permuter entre une alimentation par le premier bloc d'accumulateurs (110) et une alimentation par le deuxième bloc d'accumulateurs (120).

7. Appareil électrique (100) selon l'une des revendications 5 et 6, le premier bloc d'accumulateurs (110) et le deuxième bloc d'accumulateurs (120) possédant des résistances internes différentes.

8. Appareil électrique (100) selon l'une des revendications 5 à 7, l'appareil électrique (100) possédant un troisième bloc d'accumulateurs.

9. Appareil électrique (100) selon l'une des revendications 5 à 8, l'appareil électrique (100) étant une tondeuse à gazon.
